# EUROPÄISCHE PATENTSCHRIFT

(11) **EP 3 892 876 B1**
(45) Veröffentlichungstag und Bekanntmachung des Hinweises auf die Patenterteilung: **22.01.2025**
(21) Anmeldenummer: 21020183.6
(22) Anmeldetag: 06.04.2021
(51) Int. Cl.: F16D 3/64

(54) **ELASTISCHE NOCKENKUPPLUNG MIT REDUZIERTEN BIEGEMOMENTEN**
ELASTIC CAM COUPLING WITH REDUCED BENDING TORQUE
ACCOUPLEMENT ÉLASTIQUE À CAMES À MOMENTS DE FLEXION RÉDUITS

(30) Priorität: 08.04.2020 EP 20000147
(43) Veröffentlichungstag der Anmeldung: 13.10.2021
(73) Patentinhaber: FM Energie GmbH & Co. KG, 64646 Heppenheim (DE)
(72) Erfinder: Mitsch, Franz, 64646 Heppenheim (DE)
(74) Vertreter: Benz, Jürgen

(56) Entgegenhaltungen:
- GB-A- 238 064
- GB-A- 377 454

## Beschreibung

Die Erfindung betrifft eine Nockenkupplung, insbesondere eine Paket-Nockenkupplung für Anlagen, Maschinen und Fahrzeuge zur Übertragung von insbesondere hohen Drehmomenten.

Die Erfindung betrifft insbesondere eine elastische Nockenkupplung mit zahlreichen Paaren oder Paketen von miteinander verbundenen Nocken und mechanischen, pneumatischen oder hydraulischen Federelementen, wobei durch das innovative technische Design der Kupplung nur geringe Biegemomente an den Nocken bei Belastung auftreten.

Eine Paketkupplung dient dazu, große Drehmomente in Torsionsrichtung bei gleichzeitig geringen Rückstellkräften in axialer - radialer- und kardanischer Richtung zu übertragen. Die hydraulische Ausführung hat dabei besonders geringe Rückstellkräfte in radialer Richtung. Das geschieht nach dem Stand der Technik, in dem eine Antriebsscheibe mit Nocken und einer Abtriebsscheibe mit Nocken mit Gummielementen verbunden werden..

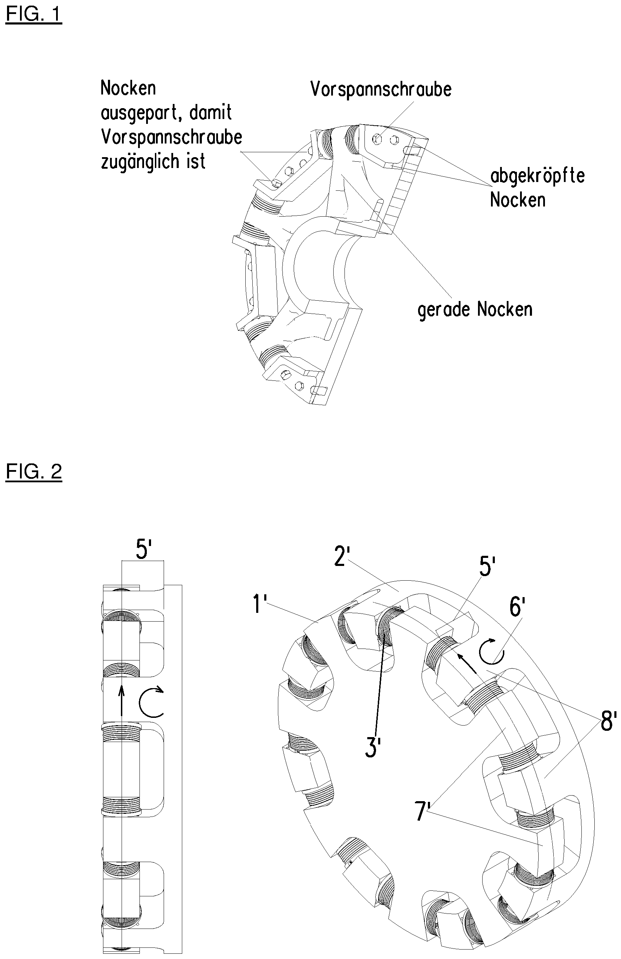

Die WO 2011/088965 offenbart eine Paketkupplung aus einer sternförmigen Antriebsscheibe mit geraden nicht gewinkelten Nocken und einer sternförmigen Abtriebsscheibe mit gekröpften bzw. ausgesparten Nocken, die nach außen geöffnet sind, so dass dadurch die zur Vorspannung benötigten Vorspanschrauben besser bedient werden können. Antriebs- und Abtriebsscheibe sind über die Nocken durch in Bezug auf ihre Auflagefläche gleich große spezielle mechanisch regulierbare Elastomerfedern miteinander verbunden (Fig. 1).

Aus der WO 2011/088860 A1 und der WO 2013/041082 A1 sind Paketkupplungen bekannt, welche aus zwei gegenüberliegenden sternförmigen zueinander versetzten Kupplungsteilen gebildet werden, wobei an dem freien Ende eines jeden Arms der beiden sternförmigen Kupplungsteile ein mit Befestigungsmitteln ausgestattetes Nockenelement befestigt ist mit einem daran anvulkanisierten, bündig abschließenden elastischen Federelement. Während die Nockenelemente des einen Kupplungsteils gerade, bzw. in Verlängerung der sternförmigen Arme, und somit ohne seitlichen Winkelversatz angeordnet sind, sind die Nockenelemente des anderen Kupplungsteils im Wesentlichen dazu seitlich versetzt angeordnet, und zwar in der Weise, dass sich bei Zusammenfügen der beiden Kupplungsteile ein ungeteilter elastischer Kupplungsring ergibt, der eine einheitliche tangentiale Vorspannung erzeugen kann (Fig. 2). Die beiden genannten Patentanmeldungen unterscheiden sich im Design der Nocken und der elastischen Federelemente und haben sich unterschiedliche Aufgaben gestellt,: eine Kupplung mit vereinfachter Montage (WO 2013/041082 A1) oder eine Kupplung mit größerer Kompaktheit und geringerem Gewicht (WO 2011/088860 A1) zu Verfügung zu stellen.

Die Patentschrift GB 238,064 beschreibt eine Wellenkupplung mit ringförmigen, bzw. U-förmigen elastischen Elementen befestigt an einer drei-armigen Lauf-Nabe mit Nockenelementen.

Bei den genannten Kupplungen des Standes der Technik umschließen, wie beschrieben, die Nocken der Antriebsscheibe und der Abtriebsscheibe die Gummi- oder Federelemente. Die Nocken beider Scheiben müssen dabei mindestens so lang sein wie die Breite bzw. der Durchmesser der elastischen Elemente Das hat wiederum zur Folge, dass die Kupplungsscheiben der bekannten Kupplungen einen relativ großen Abstand zueinander haben müssen. Aufgrund des Antriebsdrehmoments ergeben sich somit unerwünschte Querbiegemomente insbesondere in den seitlich zur jeweiligen Scheibe versetzt angeordneten Nockenelementen. Diese müssen daher eine relative große Materialdicke aufweisen zur Übertragung der nicht unerheblichen lokalen Biegemomente. Überdies sind diese Teile der Kupplung leichter der Materialermüdung unterworfen. Eine Erhöhung der Materialdicke führt aber nicht nur zu mehr Platzbedarf sondern auch zu deutlich mehr Gewicht. Kupplungen, die für große Anlagen oder Maschinen mit hohen Drehmomenten vorgesehen sind, erreichen so oft ein Gewicht von mehreren Tonnen, so dass eine Gewichtseinsparung durch eine leichtere und effektivere Bauweise der Kupplung sehr wünschenswert ist.

Es bestand somit die Aufgabe eine Kupplung zur Übertragung von insbesondere großen Drehmomenten, beispielsweise > 5.000 kNm, zur Verfügung zu stellen, welche eine schmale und gewichtsreduzierte Bauform aufweist und dabei unter Belastung nur geringe Biegekräfte in der Kupplung, insbesondere im Bereich der Nocken, erzeugt.

Die Aufgabe wurde durch die Bereitstellung einer Nockenkupplung, wie unten und in den Ansprüchen dargelegt und spezifiziert, gelöst.

Gegenstand der Erfindung ist somit eine elastische Paket-Nockenkupplung, umfassend eine Antriebsscheibe (1) mit einem Grundkörper und mit davon sternförmig nach außenstehenden Trägernocken (7) und eine im Wesentlichen gleich große Abtriebsscheibe (2) mit einem Grundkörper und mit davon sternförmig nach außenstehenden Trägernocken (8), wobei die Scheiben (1)(2) gegenüber und axial zueinander winkelversetzt angeordnet sind und Elemente oder Vorrichtungen aufweisen zur Übertragung eines Drehmomentes einer Antriebswelle des ersten Maschineteils auf eine Abtriebswelle des zweiten Maschinenteils, und die Trägernocken (7) der Antriebsscheibe (1) über elastische Federelemente(3) mit den Trägernocken (8) der Abtriebsscheibe (2) verbunden sind, wobei sowohl die Trägernocken(7) der

Antriebsscheibe (1) als auch die Trägernocken (8) der Abtriebsscheibe (2) in Relation zur Ebene der beiden gegenüberliegenden Scheiben (1)(2) einen vorzugsweise im Wert identischen Anstellwinkel (14) aufweisen, der so gerichtet ist, dass sie zueinander geneigt angeordnet sind. Dabei sind die elastischen Federelemente (3) erfindungsgemäß so dimensioniert, dass sie über die beidseitig angrenzenden Trägernocken (7)(8), mittels von vorzugsweise zylindrisch oder konisch geformten Bauteilen, die als Überstand (23) bzw. überstehende Adapterscheiben fungieren, hinausragen.

Die Größe der jeweils überstehenden Adapterscheibe, welche ein eigenständiges Bauteil, ein integraler Bestandteil der elastischen Federelemente (3), oder ein integraler Bestandteil der Trägernocken (7)(8) sein kann, ist erfindungsgemäß durch das Verhältnis des Durchmessers (21) der elastischen auskragenden, vorzugsweise runden oder ovalen Federelemente (3) zur Dicke (22) der Auflage bzw. der Nocken-Seitenflächen der angrenzenden schmäleren Trägernocken (7)(8) definiert, und nimmt erfindungsgemäß Werte zwischen 1.2 und 2.0, vorzugsweise zwischen 1.4 und 1.8 ein.

Der besagte Anstellwinkel (14) der zueinander geneigten Trägernocken (7)(8) beträgt dabei erfindungsgemäße nicht mehr als 30°, insbesondere 10 - 30°, vorzugsweise nicht mehr als 20°, insbesondere 15 - 20°.

Die Antriebs- und Abtriebsscheibe (1)(2) bzw. deren Grundkörper weisen erfindungsgemäß jeweils 3 - 12, vorzugsweise 4 - 10, insbesondere 6 - 8 Trägernocken (7)(8) auf, welche durch die jeweils doppelte Anzahl elastischer Federelemente (3) miteinander verbunden sind. Prinzipiell können die Grundkörper aber auch mehr als 12 sternförmig angeordnete Trägernocken aufweisen.

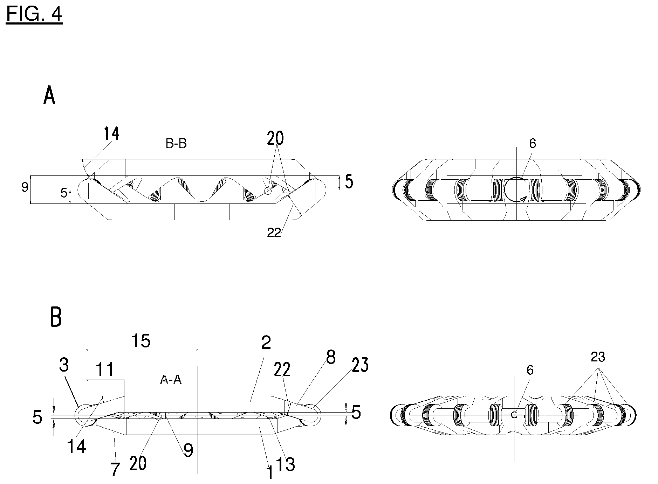

Die erfindungsgemäße Kupplung weist eine deutlich schlankere Bauform als vergleichbare konventionelle Kupplungen (siehe Fig. 4). Diese schlankere Bauform hat den Vorteil, dass die Trägernocken (7)(8) auf kleinem Raum so stark miteinander verschränkt werden können, dass der Abstand (9) zwischen Antriebsscheibe (7) und Abtriebsscheibe (8) klein werden kann, ohne dass eine Kollision der einzelnen Nocken in den Kreuzungsbereichen (20) der Trägernocken während des Betriebes stattfindet.

Bei einer derartigen Kupplung werden bei Belastung durch hohe Drehmomente im Vergleich zu den bekannten Kupplungen des Standes der Technik nur verhältnismäßig kleine Biegemomente (6) im Bereich der Nockenachsen (17) des Kupplungsringes erzeugt:
Durch die geringere Ausladung der Trägernocken(7)(8) wird das um eine gedachte radial und senkrecht zur Kupplungs-Rotationsachse (18) ausgerichtete Nockenachse (17) wirkende Biegemoment (6) reduziert, wodurch die Biegebelastungen in den einzelnen Trägernocken deutlich kleiner werden und damit die Lasten trotz der kleineren Querschnitte (22) übertragen werden können.

Die dadurch mögliche Gewichtsreduzierung der erfindungsgemäßem Kupplung liegt im Vergleich zur einer konventionellen Kupplung bei dem Faktor 1,5 bis 2. Bei einem Kupplungsgewicht von zum Beispiel sechs Tonnen können so durch die erfindungsgemäße Bauweise 2 - 3 Tonnen an Gewicht eingespart werden, was auch letztlich ein bedeutsamer Material- und damit auch Kostenfaktor ist.

Die elastischen Federelemente (3) der erfindungsgemäßen Kupplung können an sich bekannte Schichtfederelemente aus einem oder mehreren elastischen Schichten sein, welche durch unelastische Stützplatten voneinander getrennt sind.

Solche Schichtfedern können mechanisch in ihrer Steifigkeit adaptierbar sein, wie dies z.B. in der WO 2011/088965 A1 beschrieben ist.

Um der Kupplung einen radialen Freiheitsgrad zu ermöglichen, werden erfindungsgemäß und vorzugsweise auch Elastomer-Hydraulikelemente als Federelemente (3) eingesetzt. Beispielsweise können die hydraulischen Elastomerelemente, welche in der EP 2 003 362 B1 oder der EP 1 566 543 B1 beschrieben sind, sehr effektiv verwendet werden.

Diese Elemente werden erfindungsgemäß hydraulisch durch entsprechende Leitungen so verschaltet, dass eine radiale Verschiebung durch Flüssigkeitsaustausch ermöglicht wird. Dazu werden jeweils die Flüssigkeitskammern aller druckseitigen Elemente und die Flüssigkeitskammern aller entlastungsseitigen Elemente hydraulisch miteinander verbunden. Damit weist die erfindungsgemäße Kupplung nicht nur in axialer und kardanischer Richtung sondern auch zusätzlich noch in radialer Richtung eine geringe Steifigkeit auf, so dass sie im Wesentlichen nur Rotationskräfte überträgt.

In einer weiteren Ausführungsform der Erfindung kann, sofern gewünscht, das Drehmoment der erfindungsgemäßen Kupplung kurzzeitig begrenzt werden. Dazu wird an dem druckseitigen Hydraulikkreis ein Druckmembran- Blasen-Speicher ergänzt. Dieser wird mit dem im Normalbetrieb maximal auftretenden Druck gefüllt. Bei größeren Drücken infolge von Extremlastspitzen wird Hydraulikflüssigkeit in den Membran - Blasen Speicher gedrückt, so dass im Überlastfall größere Federwege möglich sind. Sobald die Kraft wieder auf normales Niveau abfällt drückt der Membran-Blasenspeicher die Hydraulikflüssigkeit wieder heraus und das System arbeitet normal weiter.

Gegenstand der Erfindung ist somit auch eine entsprechende elastische Nockenkupplung welche als elastische Federelemente (3) nicht nur statische oder mechanisch regulierbare Schichtfederelemente oder pneumatische Federelemente sondern stattdessen hydraulische Federelemente, bzw. hydraulische Elastomerelemente oder Kombination aus diesen aufweist, wobei vorzugsweise die Hydraulik so angeordnet und betrieben wird, dass die elastischen Federelemente (3) auch in radialer Richtung eine geringe Steifigkeit erhalten , so dass die Kupplung im Wesentlichen nur Rotationskräfte übertragen kann.

Die vorteilhaften Eigenschaften der erfindungsgemäßen Kupplung können wie folgt zusammengefasste werden:
- Geringe Biegungsbelastung im Nockenbereich der Kupplung durch beidseitig schräggestellte sich kreuzende aber nicht kollidierende Trägernocken mit einem Anstellwinkel von jeweils < 30°, vorzugsweise < 20° und Nockendicken die deutlich kleiner sind als die überstehenden angrenzenden elastischen Federelemente, wobei in einer Ausführungsform der Erfindung der unterschiedliche Durchmesser durch keglige oder zylindrische Adapterscheiben, die angegossen /angeschmiedet oder direkt am Elastomerteil befestigt sind, erreicht wird;
- dadurch bedingte schmale platzsparende und gewichtsarme und dadurch materialsparende und kostengünstige Bauweise;
- es können baugleiche bzw. identische Scheiben für Antriebsscheibe und Abtriebsscheibe verwendet werden;
- durch Einsatz von elastischen, vorzugsweise regulierbaren Hydraulikelementen, optional mit Druckbegrenzung durch Einsatz von Druckmembran-Blasenspeichern, kann die erfindungsgemäße Kupplung so eingestellt werden, dass sie im Wesentlichen nur Rotationskräfte überträgt;
- Universelle Verwendung im allgemeinen Anlagen- , Maschinen- und Fahrzeugbau zur zwangsarmen Übertragung von insbesondere größeren Drehmomenten;
- Kupplung ist vorzugsweise vorgesehen, aber nicht darauf beschränkt, für den Einsatz in Windkraftanlagen, insbesondere im Triebstrang von Windkraftanlagen mit entsprechend großen Drehmomenten von mehr als 5000 kNm; hierbei vorzugsweise zwischen Rotorlager und Getriebe oder zwischen Rotorlager und Generator;

Im Folgenden werden die Abbildungen näher beschrieben:
Fig. 1: zeigt eine Kupplung des Standes der Technik, wie sie in der WO 2011/088965 A1 offenbart wird. Diese Ausführungsform ist im Text dieser Anmeldung weiter vorne detaillierter beschrieben.
Fig. 2: zeigt die Skizze des Konzepts der Kupplungen, wie sie in der WO 2011/088860 A1 und der WO 2013/041082 A1 anhand von Kupplungen mit einem unterschiedlichem Design beschrieben sind. Details sind ebenfalls weiter vorne in dieser Anmeldung dargelegt.
   Während die vordere Kupplungsscheibe sternförmig gerade und nicht versetzte Nocken (7') aufweist, ist die hintere Kupplungsscheibe mit seitlich versetzten Nocken (8') versehen, welche so angeordnet sind, dass sie in die Zwischenräume der Nocken (7') der vorderen Scheibe passen und mit diesen über Federelemente (3') verbunden sind. Dadurch ergibt sich ein erhebliches Biegungsmoment (6') im Bereich dieser seitlich zur Scheibe versetzten Nocken und damit notwendigerweise auch ein größerer Abstand der beiden Kupplungsscheiben. Dies wiederum bedingt einen größeren Biegehebel (5) zwischen KraftWirklinie und Krafteinleitung in das jeweilige Federelement.

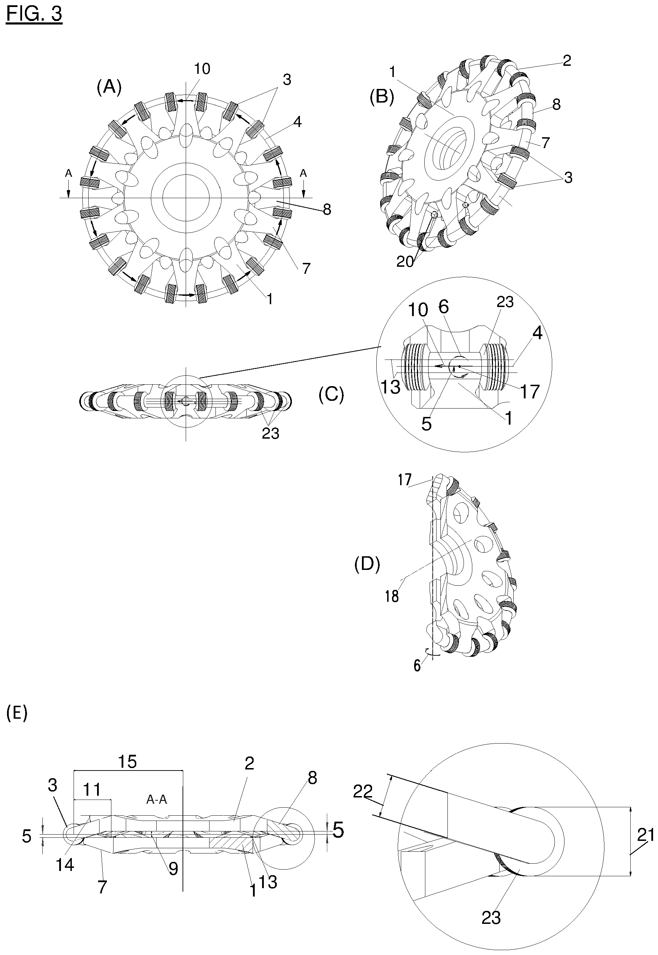

Fig. 3: zeigt verschieden Ansichten einer erfindungsgemäßen Nockenkupplung.
   (A) zeigt eine Draufsicht der erfindungsgemäßen Kupplung. Diese umfasst zwei identische Grundkörper aus jeweils 10 sternförmig angeordneten Trägernocken (7) (vordere Scheibe (1)) und 10 sternförmig angeordneten Trägernocken (8) (hintere Scheibe (2)). Die Trägernocken der hinteren Scheibe befinden sich in den Zwischenräumen der vorderen Scheibe und bilden mit diesen und den dazwischen angebrachten elastischen Federelementen (3) den eigentlichen Kupplungsring. Die für die Erfindung wesentliche Drehmoment-Kraftlinie ist mit (4) bezeichnet.
   (B) zeigt eine perspektivische Sicht der erfindungsgemäßen Kupplung. Man erkennt, dass beide Kupplungsscheiben (1) und (2) mit ihren Trägernocken (7) und (8) axial winkelversetzt sind. Die Trägernocken (7) und (8) sind gegeneinander geneigt und haben einen identischen Anstellwinkel. Dadurch können die Grundkörper der Kupplungsscheiben sehr eng nebeneinander positioniert werden, ohne dass die Nocken in ihren Kreuzungsbereichen (20) sich während des Betriebes berühren. Man erkennt auch, dass die hier runden Federelemente (3) über die Nockenendbereiche hinausragen, also einen größeren Durchmesser aufweisen als die Dicke/Breite der angrenzenden Nocken.
   (C) zeigt auf der linken Seite die erfindungsgemäße Kupplung gemäß Fig. 1 (A) und (B) aus der Seitenansicht. Auf der rechten Seite ist ein vergrößerter Ausschnitt wiedergegeben. Position (6) gibt das Biegemoment um die Nockenachse (17) wieder. Position (5) stellt den Abstand Wirklinie-Kraft zur Krafteinleitung Federelement dar. Position (13) stellt die Linie der Biegemoment-Einleitung der Nocken dar. (4) gibt die Drehmoment-Kraftwirklinie wieder, während Position (13) die Linie der Biegemoment-Einleitung der Nocken wiedergibt. Position (23) bildet den hier konischen Überstand gegenüber der Nockenbreite als Adapterteil zu den angrenzenden elastischen Schichtelementen ab. Auf die Adapterteile kann ggf. auch verzichtete werden.
   (D) zeigt eine perspektivischen Schnitt durch die erfindungsgemäße Kupplung Eingezeichnet ist hier die Nockenachse (17) und die senkrecht dazu angeordnete Kupplungsachse (18).
   (E) zeigt einen Schnitt (A-A) durch die Kupplung der Fig. 3 (A) sowie eine Vergrößerung im Bereich eines Federelementes (3), welche die Antriebsscheibe (1) mit der Abtriebsscheibe (2) verbindet. Position (5) stellt wiederum den Abstand Wirklinie-Kraft zur Krafteinleitung Federelement dar, während Position (9) den Abstand zwischen den beiden Kupplungsscheiben (1)(2) darstellt. Position (11) gibt die Länge der schräg angestellten Trägernocken (7) wieder sowie den Anstellwinkel (14) gegenüber der Ebene der Kupplungsscheiben. Position (15) gibt schließlich den Wirkradius der Kupplung an.
      Der vergrößerte Ausschnitt auf der rechten Seite zeigt im Bereich des Federelementes (3) das Überstandelement (23) mit seinem Durchmesser (22), welcher deutlich größer ist als die Dicke (22) des Trägernockens in diesem Bereich.
**Fig. 4** zeigt einen Vergleich zwischen einer Kupplung des Standes der Technik und der erfindungsgemäßen Kupplung:
   (A): zeigt eine Kupplung des Standes der Technik mit Nocken, welche so breit sind wie der Durchmesser der Elastomerelemente.
   (B): zeigt im Vergleich hierzu eine erfindungsgemäße Ausführungsform mit schmaleren Nocken.

Es wird deutlich, dass bei der konventionellen Kupplung mit den breiteren Nocken auch der Nocken Anstellwinkel (14) größer werden muss um bei sonst gleichen Abmessungen ausreichend Platz für die Verschränkung der gegenüberliegenden Nocken zu erhalten, ohne dass eine Kollision im Kreuzungsbereich (20) entsteht. Somit vergrößert sich auch die Biegehebel-Länge (5) was zu einem größeren Biegemoment (6) führt.

## Patentansprüche

1. Elastische Nockenkupplung mit Nockenachsen (17), welche senkrecht zur Rotationsachse der Kupplung angeordnet sind, zur Übertragung eines Drehmomentes eines ersten Maschinenteils auf ein zweites Maschinenteil, umfassend eine Antriebsscheibe (1) mit sternförmig nach außenstehenden Trägernocken (7) und eine im Wesentlichen gleichgroße Abtriebsscheibe (2) mit sternförmig nach außenstehenden Trägernocken (8),
wobei
(i) die Scheiben (1)(2) gegenüber und axial zueinander winkelversetzt angeordnet sind und Elemente oder Vorrichtungen aufweisen zur Übertragung eines Drehmomentes einer Antriebswelle des ersten Maschineteils auf eine Abtriebswelle des zweiten Maschinenteils,
(ii) die Trägernocken (7) der Antriebsscheibe (1) über elastische Federelemente (3) mit den Trägernocken (8) der Abtriebsscheibe (2) verbunden sind,
(iii) die Trägernocken (7) der Antriebsscheibe (1) als auch die Trägernocken (8) der Abtriebsscheibe (2) in Relation zur axialen Ebene der beiden gegenüberliegenden Scheiben (1)(2) einen identischen Anstellwinkel (14) von nicht mehr als 30° aufweisen, und zueinander geneigt angeordnet sind, und
(iv) die elastischen Federelemente (3) so dimensioniert sind, dass sie über die beidseitig angrenzenden Trägernocken (7)(8) mit einem Überstand (23) hinausragen, **dadurch gekennzeichnet, dass**
die Trägernocken (7) der Antriebsscheibe (1) und die Trägernocken (8) der Abtriebsscheibe (2) durch den Anstellwinkel (14) in der Weise zueinander geneigt angeordnet sind, dass sie sich kreuzen, ohne sich in ihren Kreuzungsbereichen (20) während des Betriebes zu berühren, wobei die Grundkörper der Antriebs- und Abtriebsscheibe eng nebeneinander liegen,
wodurch bei Belastung nur kleine kardanische Biegemomenten (6) um die Nockenachsen (17) auftreten.

2. Elastische Nockenkupplung nach Anspruch 1, **dadurch gekennzeichnet, dass** die Größe des Überstandes (23) durch das Verhältnis des Durchmessers (21) der elastischen auskragenden Federelemente (3) zur Dicke (22) der Auflage der angrenzenden schmäleren Trägernocken (7)(8) definiert ist, und dieses Verhältnis 1.2 bis 2.0 beträgt.

3. Elastische Nockenkupplung nach Anspruch 1 oder 2, **dadurch gekennzeichnet, dass** der Anstellwinkel (14) der Trägernocken (7)(8) 10°- 30° beträgt.

4. Elastische Nockenkupplung nach einem der Ansprüche 1 - 3, **dadurch gekennzeichnet, dass** der Überstand (23) zylindrisch oder konisch geformt ist und ein eigenständiges Bauteil, ein integraler Bestandteil der elastischen Federelemente (3), oder ein integraler Bestandteil der Trägernocken (7)(8) ist

5. Elastische Nockenkupplung nach einem der Ansprüche 1 - 4, **dadurch gekennzeichnet, dass** die elastischen Federelemente (3) hydraulische Federelemente sind, welche druck- und entlastungsseitig durch Hydraulikleitungen miteinander in der Weise angeordnet und verbunden sind und betrieben werden, dass die elastischen Federelemente (3) auch in radialer Richtung eine geringe Steifigkeit aufweisen, so dass die Kupplung im wesentlichen nur Rotationskräfte überträgt.

6. Elastische Nockenkupplung nach Anspruch 5, **dadurch gekennzeichnet, dass** die Hydraulik einen Druckspeicher oder einen Druck-Blasenspeicher zur Drehmomentbegrenzung aufweist.

7. Elastische Nockenkupplung nach einem der Ansprüche 1 - 6, **dadurch gekennzeichnet, dass** die Antriebs- und Abtriebsscheibe (1)(2) jeweils 3 - 12 Trägernocken (7)(8) aufweisen, welche durch die doppelte Anzahl elastischer Federelemente (3) miteinander verbunden sind.

8. Verwendung einer elastischen Nockenkupplung nach einem der Ansprüche 1 - 7 zur zwangsarmen Übertragung von Drehmomenten > 5.000 kN × m mit geringen Rückstellkräften in Anlagen, Maschinen und Fahrzeugen.

9. Windkraftanlage umfassend Turm, Gondel, Rotor und Generator/Getriebe, **dadurch gekennzeichnet, dass** sie eine elastische Nockenkupplung gemäß einem der Ansprüche 1 - 7, aufweist, welche im Triebstrang zwischen Rotor und Generator / Getriebe der Anlage eingebaut ist.

## Claims

1. Elastic cam coupling having cam axes (17), which are arranged perpendicular to the rotation axis of the coupling, for transmitting a torque of a first machine part to a second machine part, comprising a drive disc (1) having support cams (7) projecting outward in a star shape, and a substantially equally-sized driven disc (2) having support cams (8) projecting outward in a star shape,
(i) the discs (1)(2) being arranged opposite one another and axially offset from one another and having elements or devices for transmitting a torque from a drive shaft of the first machine part to an output shaft of the second machine part,
(ii) the support cams (7) of the drive disc (1) being connected to the support cams (8) of the driven disc (2) via elastic spring elements (3),
(iii) the support cams (7) of the drive disc (1) and the support cams (8) of the driven disc (2) having an identical angle of attack (14) of no more than 30° in relation to the axial plane of the two opposite discs (1)(2), and being inclined relative to one another, and
(iv) the elastic spring elements (3) being dimensioned such that they protrude beyond the support cams (7)(8) adjacent on both sides with a projection (23),
**characterized in that**
the support cams (7) of the drive disc (1) and the support cams (8) of the driven disc (2) are inclined relative to one another by the angle of attack (14) in such a way that they cross without touching one another in their crossing regions (20) during operation, the main bodies of the drive and driven discs lying closely next to one another,
as a result of which only small cardanic bending moments (6) around the cam axes (17) occur under load.

2. Elastic cam coupling according to claim 1, **characterized in that** the size of the projection (23) is defined by the ratio of the diameter (21) of the elastic cantilevered spring elements (3) to the thickness (22) of the support of the adjacent narrower support cams (7)(8), and this ratio is 1.2 to 2.0.

3. Elastic cam coupling according to either claim 1 or claim 2,
**characterized in that** the angle of attack (14) of the support cams (7)(8) is 10°-30°.

4. Elastic cam coupling according to any of claims 1 to 3,
**characterized in that** the projection (23) is cylindrical or conical and is an independent component, an integral part of the elastic spring elements (3), or an integral part of the support cams (7)(8)

5. Elastic cam coupling according to any of claims 1 to 4, **characterized in that** the elastic spring elements (3) are hydraulic spring elements which are arranged and connected to one another on the pressure and relief sides by hydraulic lines and operated in such a way that the elastic spring elements (3) also have a low rigidity in the radial direction, so that the coupling essentially only transmits rotational forces.

6. Elastic cam coupling according to claim 5, **characterized in that** the hydraulic system has a pressure accumulator or a pressure bladder accumulator for limiting torque.

7. Elastic cam coupling according to any of claims 1 to 6, **characterized in that** the drive and driven discs (1)(2) each have 3-12 support cams (7)(8) which are connected to one another by twice the number of elastic spring elements (3).

8. Use of an elastic cam coupling according to any of claims 1 to 7 for low-constraint transmission of torques > 5,000 kN × m with low restoring forces in systems, machines and vehicles.

9. Wind turbine comprising a tower, nacelle, rotor and generator/gearbox, **characterized in that** it has an elastic cam coupling according to any of claims 1 to 7, which is installed in the drive train between the rotor and the generator/gearbox of the system.

## Revendications

1. Accouplement élastique à cames comportant des axes de came (17) qui sont agencés perpendiculairement à l'axe de rotation de l'accouplement, pour la transmission d'un couple d'une première pièce de machine à une seconde pièce de machine, comprenant un disque d'entraînement (1) comportant des cames de support (7) en forme d'étoile et faisant saillie vers l'extérieur et un disque entraîné (2) de taille sensiblement identique et comportant des cames de support (8) en forme d'étoile et faisant saillie vers l'extérieur,
dans lequel
(i) les disques (1)(2) sont agencés en face l'un de l'autre et décalés angulairement l'un par rapport à l'autre dans le sens axial, et présentent des éléments ou des dispositifs pour la transmission d'un couple d'un arbre d'entraînement de la première pièce de machine à un arbre entraîné de la seconde pièce de machine,
(ii) les cames de support (7) du disque d'entraînement (1) sont reliées aux cames de support (8) du disque entraîné (2) par l'intermédiaire d'éléments ressorts élastiques (3),
(iii) les cames de support (7) du disque d'entraînement (1) ainsi que les cames de support (8) du disque entraîné (2) présentent, par rapport au plan axial des deux disques (1)(2) opposés, un angle d'attaque (14) identique ne dépassant pas 30°, et sont agencées de manière inclinée les unes par rapport aux autres, et
(iv) les éléments ressorts élastiques (3) sont dimensionnés de telle sorte qu'ils font saillie des cames de support (7)(8) adjacentes des deux côtés avec un dépassement (23),
**caractérisé en ce que**
les cames de support (7) du disque d'entraînement (1) et les cames de support (8) du disque entraîné (2) sont agencées de manière inclinée l'une par rapport à l'autre selon l'angle d'attaque (14), de telle sorte qu'elles se croisent sans se toucher dans leurs zones de croisement (20) pendant le fonctionnement, dans lequel les corps de base du disque d'entraînement et du disque entraîné sont étroitement juxtaposés,
moyennant quoi, en cas de charge, seuls de petits moments de flexion (6) à la Cardan apparaissent autour des axes de came (17).

2. Accouplement élastique à cames selon la revendication 1,
**caractérisé en ce que** la taille du dépassement (23) est définie par le rapport entre le diamètre (21) des éléments ressorts élastiques (3) en porte-à-faux et l'épaisseur (22) de l'appui des cames de support (7)(8) plus étroites adjacentes, et ce rapport va de 1,2 à 2,0.

3. Accouplement élastique à cames selon la revendication 1 ou 2, **caractérisé en ce que** l'angle d'attaque (14) des cames de support (7)(8) va de 10° à 30°.

4. Accouplement élastique à cames selon l'une des revendications 1 à 3, **caractérisé en ce que** le dépassement (23) est de forme cylindrique ou conique et est un composant autonome, une partie intégrante des éléments ressorts élastiques (3) ou une partie intégrante des cames de support (7)(8)

5. Accouplement élastique à cames selon l'une des revendications 1 à 4, **caractérisé en ce que** les éléments ressorts élastiques (3) sont des éléments ressorts hydrauliques qui sont agencés et reliés entre eux côté pression et côté décharge par des conduites hydrauliques et qui sont actionnés de telle sorte que les éléments ressorts élastiques (3) présentent une faible rigidité, même dans la direction radiale, de sorte que l'accouplement ne transmet sensiblement que des forces de rotation.

6. Accouplement élastique à cames selon la revendication 5,
**caractérisé en ce que** le système hydraulique présente un accumulateur de pression ou un accumulateur à bulles de pression pour la limitation de couple.

7. Accouplement élastique à cames selon l'une des revendications 1 à 6, **caractérisé en ce que** les disques d'entraînement et entraîné (1)(2) présentent respectivement 3 à 12 cames de support (7)(8) qui sont reliées entre elles par le double du nombre d'éléments ressorts élastiques (3).

8. Utilisation d'un accouplement élastique à cames selon l'une des revendications 1 à 7 pour la transmission à faible contrainte de couples > 5000 kN × m avec de faibles forces de rappel dans des installations, machines et véhicules.

9. Installation éolienne comprenant une tour, une nacelle, un rotor et un générateur/boîte de vitesses, **caractérisée en ce qu'**elle présente un accouplement élastique à cames selon l'une des revendications 1 à 7, qui est monté dans la ligne d'entraînement entre le rotor et le générateur/boîte de vitesses de l'installation.
